# EUROPEAN PATENT APPLICATION

(11) **EP 2 508 322 A1**
(43) Date of publication of application: **10.10.2012**
(21) Application number: 10834232.0
(22) Date of filing: 02.12.2010
(51) Int. Cl.: B29C 45/67, B22D 17/26, B30B 15/02

(54) **MOLD CLAMPING DEVICE**

(30) Priority: 04.12.2009 CN 200910213625; 04.12.2009 CN 200920264197 U; 25.12.2009 CN 200920265549 U
(71) Applicant: Huang, Buming, Foshan, Guangdong 528300 (CN)
(72) Inventor: Huang, Buming, Foshan, Guangdong 528300 (CN)
(74) Representative: Bergmeier, Werner
(86) International application number: PCT/CN2010/079386
(87) International publication number: WO 2011/066799

(57) **Abstract**

A mold clamping device comprises stationary plate (1), moving plate (2), mold-clamping cylinder (3), mold-moving cylinder (4), etc, wherein the mold-clamping cylinder (3) comprises two or more internal recycling cylinders with an extending single-piston-rod structure. The extending end of the piston rod is connected to the moving plate (2) or the stationary plate (1). A logic valve is provided between a piston (6) and a piston rod (5) in the cylinder body (7). As the valve core (10) of the logic valve moves right or left, the oil flow between the oil chamber with the piston rod (21) and the oil chamber without the piston rod (22) ca be shut or resumed, which overcomes the defects of a large amount of oil coming in and out of the oil chambers while opening or closing the mold as well as the strong resistance. Furthermore, a partition board (8) can be provided in the oil chamber without the piston rod (22) so as to separate an empty chamber out to communicate with the atmosphere, which avoids inhaling air due to the negative pressure occurred when the mold opens.

## Description

### Technical Field

The present invention relates to mold clamping devices, and in particular, to mold clamping devices usable in an injection molding machine, a die-casting machine, an oil hydraulic machine, a profile extrusion machine, and etc.

### Technical Background

Conventional clamping mechanisms used in hydraulic injection molding machines or oil hydraulic machines generally have two plates. Most of them release or close a mold by a movable plate driven by two mold-moving cylinders, and clamp the mold by a mold-clamping cylinder which provides the required mold-clamping force. Most of conventional internal circulation mold-clamping cylinders have two out-extending piston rods, which has disadvantages such as long-length machine body, safty issues of the second out-extending piston rod at the injection end, effects on manual feeding and maintenance, and etc. However, if the second out-extending piston rod is absent, a large amount of hydraulic oil would flow back to the oil tank when closing the mold, and it would be necessary to draw the oil out of the oil tank when releasing the mold. It not only increases the resistance force for releasing or closing the mold, but also forms a negative pressure when releasing the mold and therefore absorbs air, making it unstable during releasing or closing of the mold.

### Summary of the Invention

An object of the present invention is to provide a mold clamping device which has compact structure, small resistance force and high speed.

In order to achieve the object, an internal circulation direct hydraulic two-plate clamping mechanism is provided comprising a stationary plate (1), a movable plate (2), a mold-clamping cylinder (3) comprising a cylinder body (7), a piston rod (5), a piston (6) and a logic valve, and a mold-moving cylinder (4). The piston rod (5) has an extension end that is connected with the movable plate (2), and an opposite end that is connected with the piston (6) in the cylinder body (7) and provided with a valve sleeve (11) having a circular inner chamber. A spool (10) is arranged slidablely in the inner chamber of the valve sleeve (11), with one end surface of the spool (10) defining a controlling chamber (16) with the inner chamber of the valve sleeve (11). The piston (6) comprises a middle segment (6.2) provided with a pressure chamber (15), a rear segment (6.3) provided with a valve seat (12) having a center hole (24), and a front segment (6.1), wherein when the front segment (6.1) is connected with the opposition end of the piston rod (5), the spool (10), the valve sleeve (11) and the valve seat (12) form the logic valve. The pressure chamber (15), where the valve sleeve (11) is located, is communicated with the center hole (24) of the valve seat (12) and through a passage (19) with a rod chamber (21) that is separated from a non-rod chamber (22) by the piston (6). When the spool (10) is moved towards right or left, the oil flow between the rod chamber (21) and the non-rod chamber (22) can be blocked or opened.

In the internal circulation direct hydraulic two-plate clamping mechanism according to the present invention, an isolation plate (8) is arranged slidablely in the non-rod chamber (22) of the mold-clamping cylinder (3), in order to isolate from the non-rod chamber a cavity (23) that is communicated with atmosphere.

The present invention also provide an internal circulation direct hydraulic two-plate clamping device comprising a stationary plate (1), a movable plate (2), a mold-clamping cylinder (3) comprising a cylinder body (7), a piston rod (5), a piston (6) and a logic valve, and a mold-moving cylinder. The piston rod (5) has an extension end that is connected with the movable mold plate (2) and an opposite end that is connected with the piston (6) in the cylinder body (7) and provided with a circular shaft (5.1). A spool (10) having a shaft sleeve (11) at one end is provided, the circular shaft (5.1) of the piston rod being arranged slidablely in the inner chamber of the shaft sleeve (11), the inner chamber of the shaft sleeve (11) defining a controlling chamber (16) with the end surface of the circular shaft (5.1). The piston (6) comprises a middle segment (6.2) provided with a pressure chamber (15), a rear segment (6.3) provided with a valve seat (12) having a center hole (24), and a front segment (6.1), wherein when the front segment (6.1) is connected with the opposite end of the piston rod (5), the circular shaft (5.1), the spool (10), the shaft sleeve (11) and the valve seat (12) form the logic valve. The pressure chamber (15), where the spool (10) and the shaft sleeve (11) are located, is communicated with the center hole (24) of the valve seat (12) and through a passage (19) with a rod chamber (21) that is separated from a non-rod chamber (22) by the piston (6). When the spool (10) is moved towards right or left, the oil flow between the rod chamber (21) and the non-rod chamber (22) can be blocked or opened.

In the internal circulation direct hydraulic two-plate clamping device according to the present invention, an isolation plate (8) is arranged slidablely in the non-rod chamber (22) of the mold-clamping cylinder (3), in order to isolate from the non-rod chamber a cavity (23) that is communicated with atmosphere.

The present invention also provides a direct hydraulic two-plate clamping device comprising a stationary plate, a movable plate, a mold-moving cylinder, and mold-clamping cylinders comprising four cylinders (1, 2, 3, 4), each having a single out-extending piston rod. The four mold-clamping cylinders (1, 2, 3, 4) have rod chambers (1A, 2A, 3A, 4A) that are communicated with each other through a connecting pipe (8). Three of the mold-clamping cylinders (1, 2, 3) are internal circulation cylinders, and one of the mold-clamping cylinders (4) is a cylinder comprising two oil chambers that are separated by the piston and not communicated with each other. The rod chamber (4A) of the one of the mold-clamping cylinder (4) is communicated with the rod chambers (1A, 2A, 3A) of the three of the mold-clamping cylinders (1, 2, 3) and the non-rod chamber (4B) is communicated with atmosphere or an oil source.

In the direct hydraulic two-plate clamping device according to the present invention, the connecting pipe (8) has an inner diameter equal to or larger than 1/3 of the diameter of the piston rod.

The present invention also provides a mold clamping device comprising a mold-clamping cylinder. The mold-clamping cylinder comprises a cylinder body, a piston arranged within the cylinder body, a piston rod with one end inserted into the cylinder body and fixedly connected with one end of the piston, and a logic valve provided between the piston and the piston rod. The piston comprises a communication passage provided at a side wall of the piston, and a center passage disposed in axial direction, the piston separating the cylinder body into a rod chamber and a non-rod chamber which are communicated by the connecting passage and the center passage. The piston rod is provided with a high pressure oil passage along the axial direction. The logic valve comprises a valve seat provided within the center passage of the piston, a spool provided between the valve seat and the piston rod, and a reset device that returns the spool back. The valve seat is provided with a valve seat center passage that communicates the center passage of the piston with the non-rod chamber. The end of the spool that is close to the valve seat has a sealing match with the valve seat center passage, and a controlling chamber that is communicated with the high pressure oil passage is provided between the spool and the piston rod. When the spool is moved towards right or left, the oil flow between the rod chamber and the non-rod chamber can be blocked or opened.

In the mold clamping device according to the present invention, the valve seat is provided at the end of the piston that is far from the piston rod, a segment of the valve seat center passage that is close to the spool being conical, and the end of the spool that matches the valve seat being conical.

In the mold clamping device according to the present invention, a high pressure oil outlet passage that communicates the high pressure oil passage with the center passage of the piston is also provided in the piston rod, and/or a further high pressure oil outlet passage is provided at a side wall of the cylinder body.

In the mold clamping device according to the present invention, a valve sleeve having a circular inner chamber is provided at the end of the piston rod that is connected with the piston, the spool being slidablely sealed in the valve sleeve, one end surface of the spool defining the controlling chamber with the inner chamber of the valve sleeve. The reset device is a spring that is provided between the spool and a base plate that is provided at the end of the piston that is far from the piston rod.

In the mold clamping device according to the present invention, a circular shaft is provided at the end of the piston rod that is connected with the piston, and a shaft sleeve is provided at the end of the spool that is connected with the piston rod, the circular shaft being slidablely sealed against the shaft sleeve, wherein the shaft sleeve has an inner chamber that defines the controlling chamber with an end surface of the circular shaft.

In the mold clamping device according the present invention, a first circular shaft and a second circular shaft having a decreased diameter than that of the first circular shaft are provided at the end of the piston rod that is connected with the piston. The spool has a shaft sleeve at the end that is connected with the piston rod, and a shaft hole at the other end of the spool. The shaft sleeve is slidablely sealed against the first circular shaft, and the second circular shaft is sealingly extended out of the shaft hole, with an inner wall of the shaft sleeve defining the controlling chamber with an outer wall of the second circular shaft.

In the mold clamping device according to the present invention, the spool is a hollow cylinder that is open at both ends, with a ring that extends inwards being provided at the end of the spool that is close to the piston rod. A first circular shaft and a second circular shaft is provided in sequence at the end of the piston rod, with the diameter of the second circular shaft being lager than the diameter of the first circular shaft. An outer wall of the second circular shaft is slidablely sealed against an inner wall of the piston, and an outer wall of the first circular shaft is slidablely sealed against an inner wall of the ring. The controlling chamber is defined by an inner end surface of the second circular shaft, an inner end surface of the ring, an outer wall of the first circular shaft and an inner wall of the spool.

In the mold clamping device according to the present invention, the reset device is a spring, and a flange is provided at the periphery of the end of the spool, with the spring disposed on the periphery of the spool and pushing the spool to return back.

In the mold clamping device according to the present invention, an isolation plate is arranged slidablely in the non-rod chamber, in order to isolate from the non-rod chamber a cavity.

In the mold clamping device according to the present invention, the communication passage of the piston is inclined in the side wall of the piston, or the communication passage of the piston is staggered with the oil-sealing section of the piston.

The present invention also provides a mold clamping device comprising three first mold-clamping cylinders and one second mold-clamping cylinder. The first mold-clamping cylinders are mold-clamping cylinders as described above. The second mold-clamping cylinder comprises a second cylinder body, a second piston provided within the second cylinder body, and a second piston rod having one end inserted into the second cylinder body and fixedly connected with one end of the second piston. The second piston separates the second cylinder body into a second rod chamber and a second non-rod chamber that are not communicated with each other. The rod chambers of the three first mold-clamping cylinders is communicated with the second rod chamber of the second mold-clamping cylinder by a connecting pipe, and the second non-rod chamber of the second mold-clamping cylinder is communicated with atmosphere or an oil source.

In the mold clamping device according to the present invention, the piston rod of the first mold-clamping cylinder has a diameter that is substantially half of the diameter of the cylinder body. The second piston rod of the second mold-clamping cylinder has a diameter that is substantially half of the diameter of the second cylinder body. During releasing or closing of a mold, the total volume of the rod chambers of the first mold-clamping cylinders and the second rod chamber of the second mold-clamping cylinder is substantially equal to the total volume of the non-rod chambers of the first mold-clamping cylinders.

The present invention can achieve many advantages. The present invention blocks or opens the oil flow between the rod chamber and the non-rod chamber by controlling the logic valve between the piston and the piston rod, avoiding the resistance of the second out-extending piston rod in prior art, making the device compact in structure, simple, reliable and with little resistance force.

Future, three of the four mold-clamping cylinders can be internal circulation cylinders and the rest mold-clamping cylinder can be a cylinder comprising two non-communicatable oil chambers separated by the piston. In this design, no oil or only a small amount of oil flows back to the oil tank when closing the mold, thus no oil or only a small amount of oil needs to be drawn from the oil tank, avoiding the disadvantage caused by the unstable movement during releasing or closing of the mold. Therefore, the present invention has small resistance force in the oil passage, small oil discharge, low cost and stable during releasing or closing of the mold.

### Brief Description of the Drawings

The present invention is further described in reference to the figures and embodiments, wherein:
- **Fig. 1**: is a schematic view of a first embodiment of the mold clamping device according to the present invention.
- **Fig. 2**: is a schematic view of the mold-clamping cylinder in the first embodiment of the mold clamping device according to the present invention.
- **Fig. 3**: is a schematic view of a second embodiment of the mold clamping device according to the present invention.
- **Fig. 4**: is a schematic view of the mold-clamping cylinder in the second embodiment of the mold clamping device according to the present invention.
- **Fig. 5**: is a schematic view of the mold-clamping cylinder in a third embodiment of the mold clamping device according to the present invention.
- **Fig. 6**: is a schematic view of the mold-clamping cylinder in a forth embodiment of the mold clamping device according to the present invention.
- **Fig. 7**: is a schematic view of a fifth embodiment of the mold clamping device according to the present invention.
- **Fig. 8**: is a cross-sectional view of the fifth embodiment of the mold clamping device according to the present invention.

### Detailed Description of Preferable Embodiments

### Embodiment 1

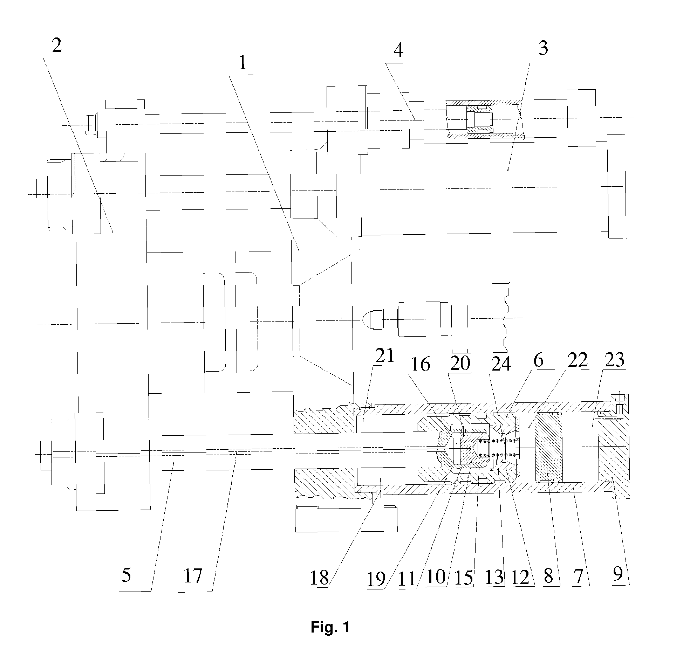

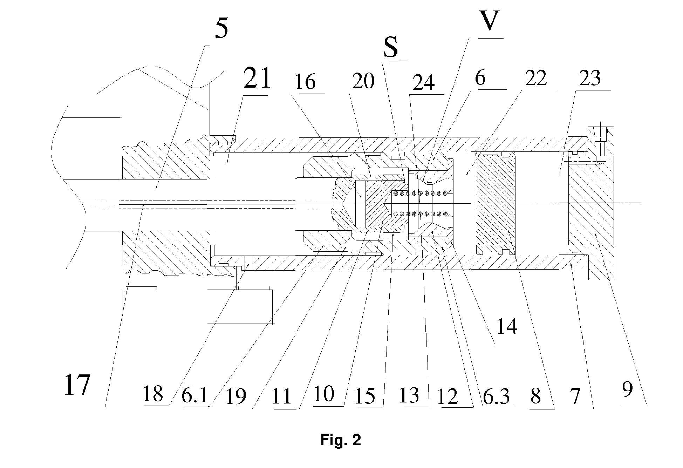

Figures 1 and 2 show the first embodiment of the mold clamping device according to the present invention which is an internal circulation direct hydraulic two-plate clamping mechanism that can be used in an injection molding machine, a die-casting machine, an oil hydraulic machine, a profile extrusion machine and other similar devices.

The mold clamping device comprises a stationary plate 1, a movable plate 2, a mold-clamping cylinder 3 and a mold-moving cylinder 4, wherein the mold-clamping cylinder 3 comprises a cylinder body 7, a piston 6, a piston rod 5 and a logic valve. The logic valve comprises a valve seat 12, a spool 10 and a reset device, in order to open or block the oil flow between the rod chamber 21 and the non-rod chamber 22, which would be further described hereafter.

The cylinder body 7 is fixed on the stationary plate 1. The piston rod 5 has an extension end that is fastened to the movable plate 2, and an opposite end that is connected with the piston 6 in the cylinder body 7 and provided with a valve sleeve 11 having a circular inner chamber. A spool 10 is arranged slidablely in the inner chamber of the valve sleeve 11, with one end surface defining a controlling chamber 16 with the inner chamber of the valve sleeve 11, and the other end surface defining a conical surface S that has a sealing match with the conical surface V of the valve seat 12. The end of the cylinder body 7 can be sealed by a cylinder cap 9. It should be understood that the cylinder body 7 can also be fixed on the movable plate 2, with the extension end of the piston rod 5 fastened to the stationary plate 1.

The piston 6 comprises a middle segment 6.2 provided with a pressure chamber 15 as a center passage, a rear segment 6.3 provided with a valve seat 12 having a center passage 24, and a front segment 6.1 capable of connection with the piston rod 5 by a thread or others. When the piston rod 5 is connected with the piston 6, the valve sleeve 11 would be located within the pressure chamber 15, and the latter is commutated with the center passage 24 of the valve seat 12. In such a way the spool 10, the valve sleeve 11 and the valve seat 12 form a logic valve.

Further, a spring 13 is provided as a reset device inside the conical surface S of the spool 10, with a spring base plate 14 fixed on the rear segment 6.3 of the piston 6. The spring 13 provided between the spring base plate 14 and the spool 10 facilitates the spool 10 to return back. Of course, the reset device can also be a gas spring, a micro motor, a gas drive device, an oil drive device or any other mechanism that can provide restoring force.

The cylinder body 7 is separated by the piston 6 into a rod chamber 21 and a non-rod chamber 22, wherein the chamber 15 is communicated with the rod chamber 21 through a communication passage 19. The communication passage 19 is provided at a side wall of the piston 6, such that the flow capacity can be improved by increasing the size of the communication passage 19, without influencing the strength of the piston 6. Of course, the communication passage 19 can also be provided parallel to the axis of the piston 6, as long as the position of the communication passage 19 is different from the oil-sealed position of the piston 6, such that the flow capacity can be improved by increasing the size of the communication passage 19 as much as possible, without influencing the strength of the piston 6.

The piston rod 5 is provided with a high pressure oil passage 17 at the center, which communicates the controlling chamber 16 with the external oil system. The controlling chamber 16 is provided with a high pressure oil outlet passage 20 communicated with the pressure chamber 15.

When the spool 10 slides back, the high pressure oil outlet passage 20 is blocked by the spool 10. When the high pressure oil flows from the high pressure oil passage 17 of the piston rod 5 into the controlling chamber 16, the spool 10 would be pushed towards right, which makes the conical surface S be in sealed connection with the conical surface V of the valve seat 12 and closes the center passage 24 of the valve seat 12, so as to block the oil flow through the pressure chamber 15 between the rod chamber 21 and the non-rod chamber 22. The high pressure oil then flows through the high pressure oil outlet passage 20 or the high pressure oil outlet passage 18 into the rod chamber 21 and the pressure chamber 15, to provide the required mold clamping force to clamp the mold.

At the end of clamping of the mold, the high pressure oil passage 17 and the high pressure oil outlet passage 18 can be connected with the oil tank, allowing the high pressure oil to flow back. With the help of the elasticity of the spring 13, the spool 10 would move towards left to open the logic valve, communicating the center passage 24 of the valve seat 12 with the pressure chamber 15, such that the oil can flow between the rod chamber 21 and the non-rod chamber 22.

Further, an isolation plate 8 can be arranged slidablely in the non-rod chamber 22, in order to isolate from the non-rod chamber 22 a cavity 23 that is communicated with atmosphere or an oil source. The slide of the isolation plate 8 can change the volume of the non-rod chamber 22, preventing the generation of a space lack of oil in the non-rod chamber 22 when releasing the mold because of the difference of the cross-sectional area between the rod chamber 21 and the non-rod chamber 22, so as to eliminate the negative pressure generated when releasing the mold.

The operation of the present embodiment is described in reference to figure 1 hereinafter. Two mold-moving cylinders 4 are symmetrically mounted on the stationary plate 1, with their piston rods connected with the movable plate 2. Four mold-clamping cylinders 3 are mounted on the four corners of the stationary plate 1, with the extension ends of their piston rods 5 connected with the movable plate 2 though the stationary plate 1.

To close the mold, the mold-moving cylinders 4 drive the movable plate 2 to move towards right. The piston rod 5 and the piston 6 of the mold-clamping cylinders 3 are caused to move towards right, such that the hydraulic oil in the non-rod chamber 22 is compressed to push the spool 10 to move towards left and flows into the pressure chamber 15 and the rod chamber 21 through the center passage 24. The isolation plate 8 is also pushed towards right in the meantime, until the oil pressures in the rod chamber 21 and the non-rod chamber 22 are in balance with atmosphere.

After closing of the mold, the high pressure oil in the oil system flows from the high pressure oil passage 17 into the controlling chamber 16, pushing the spool 10 to move towards right, and thus blocking the center passage 24 of the valve seat 12. The high pressure oil then flows through the high pressure oil outlet passage 20 or the high pressure oil outlet passage 18 into the rod chamber 21 and the pressure chamber 15, to provide the required mold clamping force to clamp the mold.

After injection, pressure maintaining, preplastication and cooling, the mold clamping is finished. The supply of the high pressure oil can be stopped, and the high pressure oil passage 17 and the high pressure oil outlet passage 18 can be connected with the oil tank. With the help of the elasticity of the spring 13, the spool 10 would move towards left to communicate the center passage 24 of the valve seat 12 with the pressure chamber 15, such that part of the hydraulic oil in the rod chamber 21 can flow into the non-rod chamber 22, communicating the oil flow between them.

Then the mold-moving cylinders 4 drive the movable plate 2 to move towards left to release the mold, making the piston rod 5 and the piston 6 of the mold-clamping cylinders 3 move towards left. Only a small amount of the hydraulic oil in the rod chamber 21 flows into the non-rod chamber 22, thus forming a negative pressure in the non-rod chamber 22. The isolation plate 8 would slide left by pushing force of atmosphere or the oil, filling the space lack of oil in the non-rod chamber 22 and eliminating the negative pressure. At last the mold is opened in order to eject the product.

The mold clamping device is compact in structure, simple, reliable and with low cost. The logic valve of the device has a large hole for the oil to flow through, achieving a small resistance force, small oil discharge and high speed, being able to meet the requirement of fast mold clamping in high precision or high speed injection molding machines.

### Embodiment 2

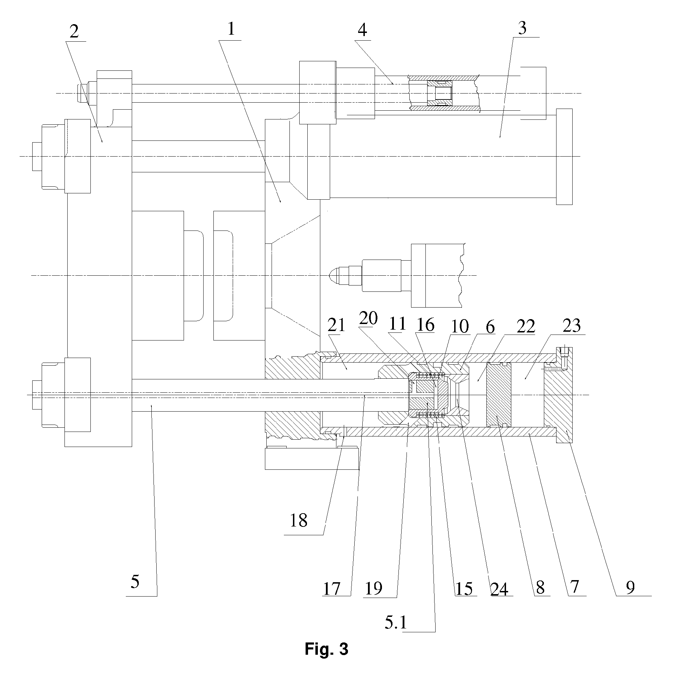

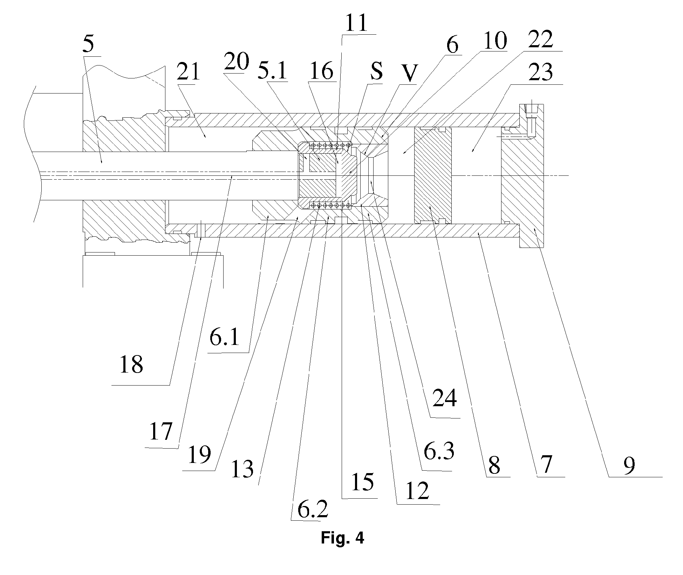

Figures 3 and figure 4 show the second embodiment of the mold clamping device according to the present invention which is an internal circulation direct hydraulic two-plate clamping mechanism that can be used in an injection molding machine, a die-casting machine, an oil hydraulic machine, a profile extrusion machine and other similar devices.

The mold clamping device comprises a stationary plate 1, a movable plate 2, a mold-clamping cylinder 3 and a mold-moving cylinder 4, wherein the mold-clamping cylinder 3 comprises a cylinder body 7, a piston 6, a piston rod 5 and a logic valve. The logic valve comprises a valve seat 12, a spool 10 and a reset device, in order to open or block the oil flow between the rod chamber 21 and the non-rod chamber 22, which would be further described hereafter.

The cylinder body 7 is fixed on the stationary plate 1. The piston rod 5 has an extension end that is fastened to the movable plate 2, and an opposite end that is connected with the piston 6 in the cylinder body 7 and provided with a circular shaft 5.1. One end of the spool 10 is provided with a shaft sleeve 11, with the circular shaft 5.1 of the piston rod being arranged slidablely in the inner chamber of the shaft sleeve 11, the inner chamber of the shaft sleeve 11 defining a controlling chamber 16 with the end surface of the circular shaft 5.1. The other end surface of the spool 10 is a conical surface S that has a sealing match with the conical surface V of the valve seat 12.

The piston 6 comprises a middle segment 6.2 provided with a pressure chamber 15 as a center passage of the piston, a rear segment 6.3 provided with a valve seat 12 having a center passage 24, and a front segment 6.1 capable of connection with the piston rod 5 by a thread or others. When the piston rod 5 is connected with the piston 6, the shaft sleeve 11 would be located within the pressure chamber 15, and the latter is communitated with the center passage 24 of the valve seat 12. In such a way the circular shaft 5.1, the spool 10, the shaft sleeve 11 and the valve seat 12 form a logic valve.

Further, a flange is provided at the periphery of the end of the shaft sleeve 11 that is connected with the piston rod 5, with the spring disposed on the periphery of the shaft sleeve 11 and between the flange and the valve seat 12. While the reset device is a spring in the present embodiment, it can also be a gas spring, a micro motor, a gas drive device, an oil drive device or any other mechanism that can provide restoring force.

The cylinder body 7 is separated by the piston 6 into a rod chamber 21 and a non-rod chamber 22, wherein the chamber 15 is communicated with the rod chamber 21 through a communication passage 19. The communication passage 19 is provided at a side wall of the piston 6, such that the flow capacity can be improved by increasing the size of the communication passage 19, without influencing the strength of the piston 6.

The circular shaft 5.1 is provided with a high pressure oil outlet passage 20 communicated with the high pressure oil passage 17, and the high pressure oil outlet passage 20 is also communicated with the pressure chamber 15.

When the spool 10 slides back, the high pressure oil outlet passage 20 is blocked by the shaft sleeve 11 of the spool 10. When the high pressure oil of the external oil system flows from the high pressure oil passage 17 of the piston rod 5 into the controlling chamber 16, the spool 10 would be pushed towards right, which makes the conical surface S be in sealed connection with the conical surface V of the valve seat 12 and closes the center passage 24 of the valve seat 12, so as to block the oil flow through the pressure chamber 15 between the rod chamber 21 and the non-rod chamber 22. The high pressure oil then flows through the high pressure oil outlet passage 20 or the high pressure oil outlet passage 18 into the rod chamber 21 and the pressure chamber 15, to provide the required mold clamping force to clamp the mold.

At the end of clamping of the mold, the high pressure oil passage 17 and the high pressure oil outlet passage 18 can be connected with the oil tank, allowing the high pressure oil to flow back. With the help of the elasticity of the spring 13, the spool 10 would move towards left to open the logic valve, communicating the center passage 24 of the valve seat 12 with the pressure chamber 15, such that the oil can flow between the rod chamber 21 and the non-rod chamber 22.

Further, an isolation plate 8 can be arranged slidablely in the non-rod chamber 22, in order to isolate from the non-rod chamber 22 a cavity 23 that is communicated with atmosphere or an oil source. The slide of the isolation plate 8 can change the volume of the non-rod chamber 22, preventing the generation of a space lack of oil in the non-rod chamber 22 when releasing the mold because of the difference of the cross-sectional area between the rod chamber 21 and the non-rod chamber 22, so as to eliminate the negative pressure generated when releasing the mold.

The operation of the present embodiment is described in reference to the figure 3 hereinafter. Two mold-moving cylinders 4 are symmetrically mounted on the stationary plate 1, with their piston rods connected with the movable plate 2. Four mold-clamping cylinders 3 are mounted on the four corners of the stationary plate 1, with the extension ends of their piston rods 5 connected with the movable plate 2 though the stationary plate 1.

To close the mold, the mold-moving cylinders 4 drive the movable plate 2 to move towards right. The piston rod 5 and the piston 6 of the mold-clamping cylinders 3 are caused to move towards right, such that the hydraulic oil in the non-rod chamber 22 is compressed to push the spool 10 to move towards left and flows into the pressure chamber 15 and the rod chamber 21 through the center passage 24. The isolation plate 8 is also pushed towards right in the meantime, until the oil pressures in the rod chamber 21 and the non-rod chamber 22 are in balance with atmosphere.

After closing of the mold, the high pressure oil in the oil system flows from the high pressure oil passage 17 into the controlling chamber 16, pushing the spool 10 to move towards right, and thus blocking the center passage 24 of the valve seat 12. The high pressure oil then flows through the high pressure oil outlet passage 20 or the high pressure oil outlet passage 18 into the rod chamber 21 and the pressure chamber 15, to provide the required mold clamping force to clamp the mold.

After injection, pressure maintaining, preplastication and cooling, the mold clamping is finished. The supply of the high pressure oil can be stopped, and the high pressure oil passage 17 and the high pressure oil outlet passage 18 can be connected with the oil tank. With the help of the elasticity of the spring 13, the spool 10 would move towards left to communicate the center passage 24 of the valve seat 12 with the pressure chamber 15, such that part of the hydraulic oil in the rod chamber 21 can flow into the non-rod chamber 22, communicating the oil flow between them.

Then the mold-moving cylinders 4 drive the movable plate 2 to move towards left to release the mold, making the piston rod 5 and the piston 6 of the mold-clamping cylinders 3 move towards left. Only a small amount of the hydraulic oil in the rod chamber 21 flows into the non-rod chamber 22, thus forming a negative pressure in the non-rod chamber 22. The isolation plate 8 would slide left by pushing force of atmosphere or the oil, filling the space lack of oil in the non-rod chamber 22 and eliminating the negative pressure. At last the mold is opened in order to eject the product.

### Embodiment 3

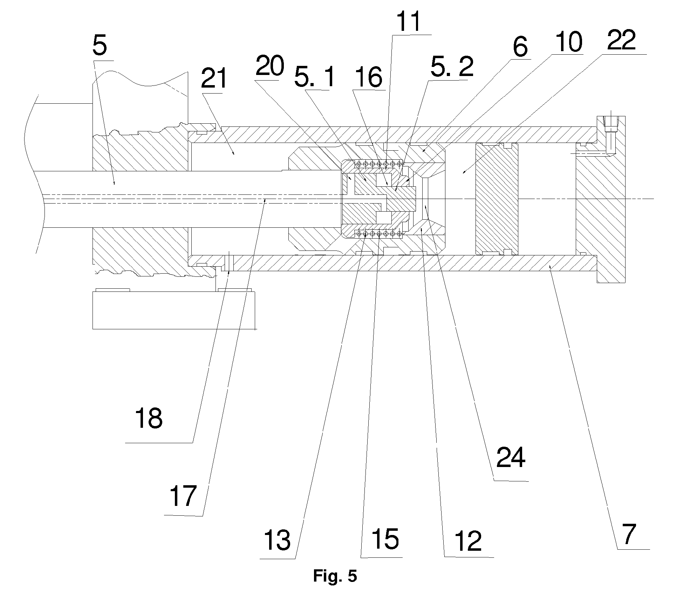

Figure 5 shows the third embodiment of the mold clamping device according to the present invention which can also be used in an injection molding machine, a die-casting machine, an oil hydraulic machine, a profile extrusion machine and other similar devices. The difference between the mold clamping device in the present embodiment and the second embodiment is the structure of the spool 10 and the piston rod 5, while the other structures are similar as above and would not be described in detail.

In the present embodiment, a first circular shaft 5.1 and a second circular shaft 5.2 having a decreased diameter than that of the first circular shaft are provided at the end of the piston rod 5 that is connected with the piston 6. The first circular shaft 5.1 has a larger diameter than that of the second circular shaft 5.2 and is connected with the second circular shaft in a step-shape.

The spool 10 has a shaft sleeve 11 at the end that is connected with the piston rod 5, and a shaft hole at the other end, through which the second circular shaft 5.2 can extend out.

To assemble the device, the shaft sleeve 11 of the spool 10 is arranged around the outer wall of the first circular shaft 5.1 of the piston rod 5. An oil sealing can certainly be provided between the inner wall of the shaft sleeve 11 and the outer wall of the first circular shaft 5.1 to improve the sealing effect. The second circular shaft 5.2 in the end of the piston rod 5 extends out of the shaft hole of the spool 10, wherein the outer wall of the second circular shaft 5.2 is slidablely sealed against the inner wall of the shaft hole. An oil sealing can certainly be provided between the outer wall of the second circular shaft 5.2 and the inner wall of the shaft hole to improve the sealing effect. Thus the inner wall of the shaft sleeve 11 defines with the outer wall of the second circular shaft 5.2 a controlling chamber 16 that is communicated with the high pressure oil passage of the piston rod 5.

In operation, the high pressure oil flows from the high pressure oil passage 17 into the controlling chamber 16, pushing the spool 10 to move towards the valve seat 12, so that the spool 10 blocks the center passage 24 of the valve seat 12, thus blocking the oil flow between the rod chamber 21 and the non-rod chamber 22. Then the high pressure oil from the high pressure oil outlet passage 20 of the piston rod 5 and the high pressure oil outlet passage 18 in the side wall of the cylinder body 7 flows in, to provide the required mold clamping force to clamp the mold.

After injection, pressure maintaining, preplastication and cooling, the mold clamping is finished. The supply of the high pressure oil can be stopped, and the high pressure oil flows through the high pressure oil outlet passage 18, 20 back to the oil tank. With the help of the elasticity of the spring 13, the spool 10 would move towards left to open and communicate the center passage 24 of the valve seat 12 with the pressure chamber 15, such that part of the hydraulic oil in the rod chamber 21 can flow into the non-rod chamber 22, communicating the oil flow between them.

In the present embodiment, the volume of the controlling chamber 16 can be effectively decreased by introducing the second circular shaft 5.2, so as to decrease the volume of the high pressure oil that needs to be injected and make the response of the spool 10 much faster. Further, the volume of the high pressure oil that needs to be returned can be decreased, so that the oil returns much faster, preventing the moving time from being too long and avoiding the increase of oil temperature.

### Embodiment 4

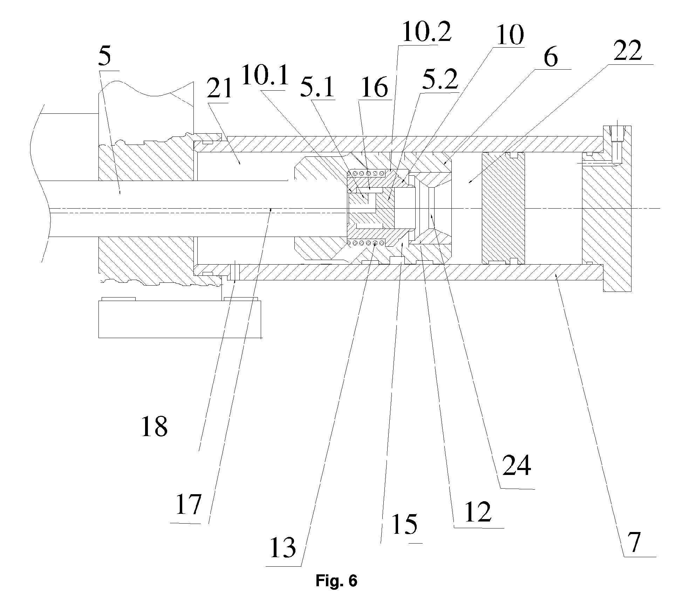

Figure 6 shows the forth embodiment of the mold clamping device according to the present invention which can also be used in an injection molding machine, a die-casting machine, an oil hydraulic machine, a profile extrusion machine and other similar devices. The difference between the mold clamping device in the present embodiment and the second embodiment is the structure of the spool 10, the piston rod 5 and the spring 13, while the other structures are similar as above and would not be described in detail.

In the present embodiment, the spool 10 is a hollow cylinder that is open at both ends, with a ring 10.1 that extends inwards being provided at the end of the spool that is close to the piston rod 5. A flange 10.2 for the assembly of the spring 13 is provided at the periphery of the end of the spool 10 that is close to the valve seat 12.

A first circular shaft 5.1 and a second circular shaft 5.2 are provided at the end of the piston rod 5, wherein the second circular shaft 5.2 has a larger diameter than that of the first circular shaft 5.1.The outer wall of the first circular shaft 5.1 is slidablely sealed against the inner wall of the ring 10.1 of the spool 10, while the outer wall of the second circular shaft 5.2 is slidablely sealed against the inner wall of the spool 10. It should be understood that an oil sealing can be provided at the slidablely sealed position to improve the sealing effect.

Inside the spool 10, the inner end surface of the second circular shaft 5.2, the inner end surface of the ring 10.1, the outer wall of the first circular shaft 5.1 and the inner wall of the spool 10 together define a controlling chamber 16 that is communicated with the high pressure oil passage 17.

The spring 13 is assembled between the end surface of the piston 6 that is far from the valve seat 12 and the flange 10.2 of the spool 10, in order to provide the force that returns the spool 10 back.

In operation, the spool 10 is pushed by the elastic restoring force of the spring 13 to move towards the valve seat 12, so that the spool 10 blocks the center passage 24 of the valve seat 12, thus blocking the oil flow between the rod chamber 21 and the non-rod chamber 22. Then the high pressure oil from the high pressure oil outlet passage 18 in the side wall of the cylinder body 7 flows in, to provide the required mold clamping force to clamp the mold.

After injection, pressure maintaining, preplastication and cooling, the mold clamping is finished. The supply of the high pressure oil can be stopped, and the high pressure oil flows through the high pressure oil outlet passage 18 back to the oil tank. Then the high pressure oil flows from the high pressure oil passage 17 of the piston rod 5 into the controlling chamber 16 and pushes the spool 10 to move towards left with the pressure of the high pressure oil, so as to open and communicate the center passage 24 of the valve seat 12 with the pressure chamber 15, such that part of the hydraulic oil in the rod chamber 21 can flow into the non-rod chamber 22, communicating the oil flow between them.

In the present embodiment, the volume of the controlling chamber 16 can be effectively decreased by arranging the controlling chamber 16 around the periphery of the first circular shaft 5.1, so as to decrease the volume of the high pressure oil that needs to be injected and make the response of the spool 10 much faster. Further, the volume of the high pressure oil that needs to be returned can be decreased, so that the oil returns much faster, preventing the moving time from being too long and avoiding the increase of oil temperature.

### Embodiment 5

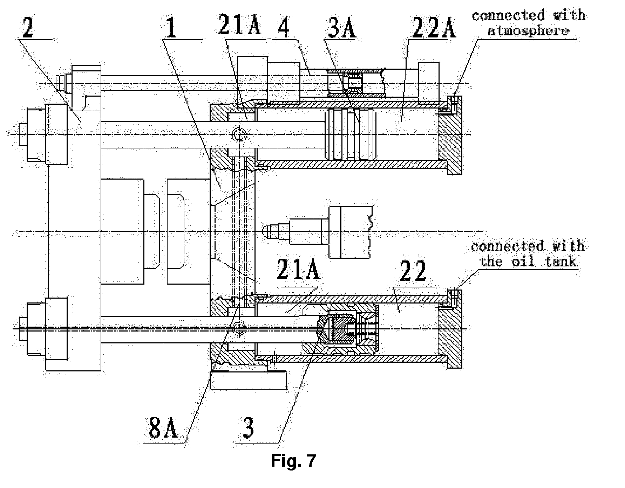

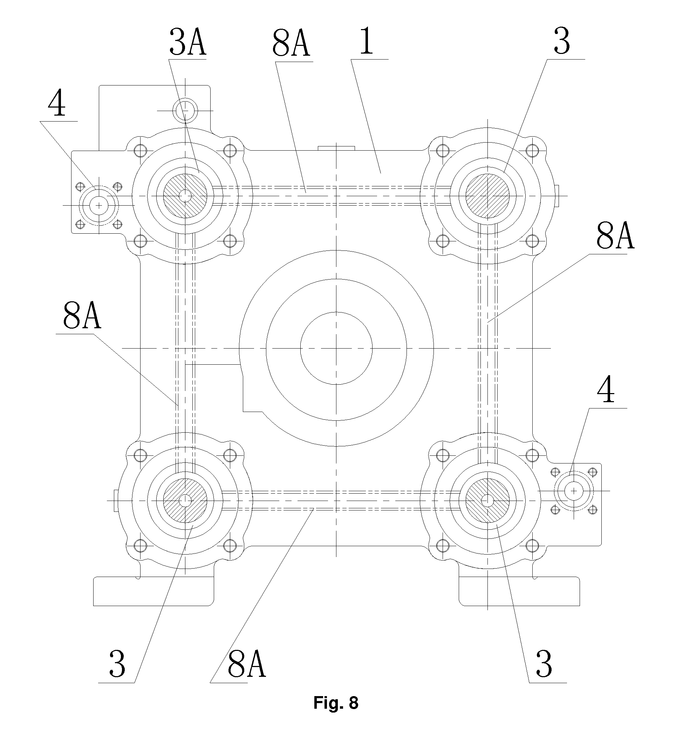

Figures 7 and figure 8 show the fifth embodiment of the mold clamping device according to the present invention which can be used in an injection molding machine, a die-casting machine, an oil hydraulic machine, a profile extrusion machine and other similar devices.

The mold clamping device comprises a stationary plate 1, a movable plate 2, mold-clamping cylinders and a mold-moving cylinder 4, wherein the mold-clamping cylinders include three first mold-clamping cylinders 3 and one second mold-clamping cylinder 3A. The first mold-clamping cylinders 3 are internal circulation mold-clamping cylinders of which the cylinder bodies are separated by the pistons and logic valves into rod chambers 21 and non-rod chambers 22, while the specific structure can be any of the structures described in above embodiments leaving out the isolation plate 8 and cavity 23 and would not be described in detail.

The second mold-clamping cylinder 3A comprises a second cylinder body, a second piston provided within the second cylinder body, and a second piston rod having one end inserted into the second cylinder body and fixedly connected with one end of the second piston, wherein the second piston separates the second cylinder body into a second rod chamber 21 A and a second non-rod chamber 22A that are not communicated with each other.

The second non-rod chamber 22A is communicated with atmosphere or an oil source, while the second rod chamber 21A is communicated with the rod chambers 21 of the three first mold-clamping cylinders 3 by a connecting pipe 8A. In the present embodiment, the connecting pipe 8A is arranged inside the stationary plate 1, with the inner diameter of the connecting pipe 8A equal to or larger than 1/3 of the diameter of the piston rod.

The piston rod of the first mold-clamping cylinder 3 has a diameter that is substantially half of the diameter of the cylinder body and the second piston rod of the second mold-clamping cylinder 3A has a diameter that is substantially half of the diameter of the second cylinder body, so that the total volume of the rod chambers 21 of the first mold-clamping cylinders 3 and the second rod chamber 21 A of the second mold-clamping cylinder 3A is substantially equal to or close to the total volume of the non-rod chambers 22 of the first mold-clamping cylinders 3.

The operation of the present embodiment is described in reference to the figures hereinafter. Two mold-moving cylinders 4 are symmetrically mounted on the stationary plate 1, with their piston rods connected with the movable plate 2. Four mold-clamping cylinders are mounted on the four corners of the stationary plate 1, with their piston rods connected with the movable plate 2.

To close the mold, the mold-moving cylinders 4 drive the movable plate 2 to move towards right, making the piston of the three first mold-clamping cylinders 3 and the second piston of the second mold-clamping cylinder 3A move towards right, so that the oil in the non-rod chambers 22 of the first mold-clamping cylinders 3 would be compressed and then flows into the rod chambers 21 of the first mold-clamping cylinders 3. Since the rod chambers 21 is connected with the second rod chamber 21 A by the connecting pipe 8A, the oil would also flow into the second rod chamber 21 A, which makes it not necessary to discharge the oil.

After closing of the mold, the high pressure oil flows into the mold-clamping cylinders, and then the logic valves of the first mold-clamping cylinders 3 block the rod chambers 21 and the non-rod chambers 22 as described in the first embodiment and the second embodiment, wherein the high pressure oil provides the required mold clamping force to clamp the mold.

After injection, pressure maintaining, preplastication and cooling, the mold clamping is finished. The mold-moving cylinders 4 drive the movable plate 2 to move towards left to release the mold, making the pistons of the first mold-clamping cylinders 3 and the second piston of the second mold-clamping cylinder 3A move towards left, so that the oil in the rod chambers 21 of the first mold-clamping cylinders 3 and the second rod chamber 21 A of the second mold-clamping cylinder 3A would flow into the non-rod chambers 22 of the first mold-clamping cylinders 3 without any oil supplement. At last the mold is opened in order to eject the product. When the diameter of the piston rod of the mold-clamping cylinder is a little larger or smaller than the radius of the mold-clamping cylinder, only a very small amount of oil would be discharged from the non-rod chambers 22 to the oil tank or be drawn from the oil tank. In the present embodiment, no oil or only a small amount of oil is discharged to the oil tank when closing the mold, so that no oil or only a small amount of oil needs to be drawn from the oil tank, which avoids the disadvantages in the two-plate mold clamping devices of prior art. The present embodiment has simple structure, small resistance force, small oil discharge, low cost, convenient assembly and usage and stable movement during releasing or closing of the mold.

## Claims

1. An internal circulation direct hydraulic two-plate clamping mechanism, comprising
a stationary plate (1),
a movable plate (2),
a mold-clamping cylinder (3) comprising a cylinder body (7), a piston rod (5), a piston (6), and a logic valve, and
a mold-moving cylinder (4),
wherein the piston rod (5) has an extension end that is connected with the movable plate (2), and an opposite end that is connected with the piston (6) in the cylinder body (7) and provided with a valve sleeve (11) having a circular inner chamber,
wherein a spool (10) is arranged slidablely in the inner chamber of the valve sleeve (11), with one end surface of the spool (10) defining a controlling chamber (16) with the inner chamber of the valve sleeve (11),
wherein the piston (6) comprises a middle segment (6.2) provided with a pressure chamber (15), a rear segment (6.3) provided with a valve seat (12) having a center hole (24), and a front segment (6.1), wherein when the front segment (6.1) is connected with the opposition end of the piston rod (5), the spool (10), the valve sleeve (11) and the valve seat (12) form the logic valve,
wherein the pressure chamber (15), where the valve sleeve (11) is located, is communicated with the center hole (24) of the valve seat (12) and through a passage (19) with a rod chamber (21) that is separated from a non-rod chamber (22) by the piston (6),
wherein when the spool (10) is moved towards right or left, the oil flow between the rod chamber (21) and the non-rod chamber (22) can be blocked or opened.

2. The internal circulation direct hydraulic two-plate clamping mechanism according to claim 1, wherein an isolation plate (8) is arranged slidablely in the non-rod chamber (22) of the mold-clamping cylinder (3), in order to isolate from the non-rod chamber a cavity (23) that is communicated with atmosphere.

3. An internal circulation direct hydraulic two-plate clamping device comprising
a stationary plate (1),
a movable plate (2),
a mold-clamping cylinder (3) comprising a cylinder body (7), a piston rod (5), a piston (6), and a logic valve, and
a mold-moving cylinder,
wherein the piston rod (5) has an extension end that is connected with the movable mold plate (2) and an opposite end that is connected with the piston (6) in the cylinder body (7) and provided with a circular shaft (5.1),
wherein a spool (10) having a shaft sleeve (11) at one end is provided, the circular shaft (5.1) of the piston rod being arranged slidablely in the inner chamber of the shaft sleeve (11), the inner chamber of the shaft sleeve (11) defining a controlling chamber (16) with the end surface of the circular shaft (5.1),
wherein the piston (6) comprises a middle segment (6.2) provided with a pressure chamber (15), a rear segment (6.3) provided with a valve seat (12) having a center hole (24), and a front segment (6.1), wherein when the front segment (6.1) is connected with the opposite end of the piston rod (5), the circular shaft (5.1), the spool (10), the shaft sleeve (11) and the valve seat (12) form the logic valve,
wherein the pressure chamber (15), where the spool (10) and the shaft sleeve (11) are located, is communicated with the center hole (24) of the valve seat (12) and through a passage (19) with a rod chamber (21) that is separated from a non-rod chamber (22) by the piston (6),
wherein when the spool (10) is moved towards right or left, the oil flow between the rod chamber (21) and the non-rod chamber (22) can be blocked or opened.

4. The internal circulation direct hydraulic two-plate clamping device according to claim 3, wherein an isolation plate (8) is arranged slidablely in the non-rod chamber (22) of the mold-clamping cylinder (3), in order to isolate from the non-rod chamber a cavity (23) that is communicated with atmosphere.

5. A direct hydraulic two-plate clamping device comprising a stationary plate,
a movable plate,
a mold-moving cylinder, and
mold-clamping cylinders comprising four cylinders (1, 2, 3, 4), each having a single out-extending piston rod,
wherein the four mold-clamping cylinders (1, 2, 3, 4) have rod chambers (1 A, 2A, 3A, 4A) that are communicated with each other through a connecting pipe (8),
wherein three of the mold-clamping cylinders (1, 2, 3) are internal circulation cylinders, and one of the mold-clamping cylinders (4) is a cylinder comprising two oil chambers that are separated by the piston and not communicated with each other,
wherein the rod chamber (4A) of the one of the mold-clamping cylinder (4) is communicated with the rod chambers (1 A, 2A, 3A) of the three of the mold-clamping cylinders (1, 2, 3) and the non-rod chamber (4B) is communicated with atmosphere or an oil source.

6. The direct hydraulic two-plate clamping device according to claim 5, wherein the connecting pipe (8) has an inner diameter equal to or larger than 1/3 of the diameter of the piston rod.

7. A mold clamping device comprising a mold-clamping cylinder, wherein the mold-clamping cylinder comprises
a cylinder body,
a piston arranged within the cylinder body,
a piston rod with one end inserted into the cylinder body and fixedly connected with one end of the piston, and
a logic valve provided between the piston and the piston rod, wherein the piston comprises a communication passage provided at a side wall of the piston, and a center passage disposed in axial direction, the piston separating the cylinder body into a rod chamber and a non-rod chamber which are communicated by the connecting passage and the center passage,
wherein the piston rod is provided with a high pressure oil passage along the axial direction,
wherein the logic valve comprises a valve seat provided within the center passage of the piston, a spool provided between the valve seat and the piston rod, and a reset device that returns the spool back, wherein the valve seat is provided with a valve seat center passage that communicates the center passage of the piston with the non-rod chamber,
wherein the end of the spool that is close to the valve seat has a sealing match with the valve seat center passage, and a controlling chamber that is communicated with the high pressure oil passage is provided between the spool and the piston rod,
wherein when the spool is moved towards right or left, the oil flow between the rod chamber and the non-rod chamber can be blocked or opened.

8. The mold clamping device according to claim 7, wherein the valve seat is provided at the end of the piston that is far from the piston rod, a segment of the valve seat center passage that is close to the spool being conical, and the end of the spool that matches the valve seat being conical.

9. The mold clamping device according to claim 7, wherein a high pressure oil outlet passage that communicates the high pressure oil passage with the center passage of the piston is also provided in the piston rod, and/or a further high pressure oil outlet passage is provided at a side wall of the cylinder body.

10. The mold clamping device according to claim 7, wherein a valve sleeve having a circular inner chamber is provided at the end of the piston rod that is connected with the piston, the spool being slidablely sealed in the valve sleeve, one end surface of the spool defining the controlling chamber with the inner chamber of the valve sleeve, wherein the reset device is a spring that is provided between the spool and a base plate that is provided at the end of the piston that is far from the piston rod.

11. The mold clamping device according to claim 7, wherein a circular shaft is provided at the end of the piston rod that is connected with the piston, and a shaft sleeve is provided at the end of the spool that is connected with the piston rod, the circular shaft being slidablely sealed against the shaft sleeve, wherein the shaft sleeve has an inner chamber that defines the controlling chamber with an end surface of the circular shaft.

12. The mold clamping device according to claim 7, wherein a first circular shaft and a second circular shaft having a decreased diameter than that of the first circular shaft are provided at the end of the piston rod that is connected with the piston, the spool having a shaft sleeve at the end that is connected with the piston rod, and a shaft hole at the other end of the spool; wherein the shaft sleeve is slidablely sealed against the first circular shaft, and the second circular shaft is sealingly extended out of the shaft hole, with an inner wall of the shaft sleeve defining the controlling chamber with an outer wall of the second circular shaft.

13. The mold clamping device according to claim 7, wherein the spool is a hollow cylinder that is open at both ends, with a ring that extends inwards being provided at the end of the spool that is close to the piston rod;
wherein a first circular shaft and a second circular shaft is provided in sequence at the end of the piston rod, with the diameter of the second circular shaft being lager than the diameter of the first circular shaft; wherein an outer wall of the second circular shaft is slidablely sealed against an inner wall of the piston, and an outer wall of the first circular shaft is slidablely sealed against an inner wall of the ring,
wherein the controlling chamber is defined by an inner end surface of the second circular shaft, an inner end surface of the ring, an outer wall of the first circular shaft and an inner wall of the spool.

14. The mold clamping device according to any one of claims 11 to 13,
wherein the reset device is a spring, and a flange is provided at the periphery of the end of the spool, with the spring disposed on the periphery of the spool and pushing the spool to return back.

15. The mold clamping device according to any one of claims 7 to 14,
wherein an isolation plate is arranged slidablely in the non-rod chamber, in order to isolate from the non-rod chamber a cavity.

16. The mold clamping device according to any one of claims 7 to 14,
wherein the communication passage of the piston is inclined in the side wall of the piston, or the communication passage of the piston is staggered with the oil-sealing section of the piston.

17. A mold clamping device comprising three first mold-clamping cylinders and one second mold-clamping cylinder, wherein the first mold-clamping cylinders are mold-clamping cylinders as described in claim 7, and the second mold-clamping cylinder comprises a second cylinder body,
a second piston provided within the second cylinder body, and
a second piston rod having one end inserted into the second cylinder body and fixedly connected with one end of the second piston; wherein the second piston separates the second cylinder body into a second rod chamber and a second non-rod chamber that are not communicated with each other;
wherein the rod chambers of the three first mold-clamping cylinders is communicated with the second rod chamber of the second mold-clamping cylinder by a connecting pipe, and the second non-rod chamber of the second mold-clamping cylinder is communicated with atmosphere or an oil source.

18. The mold clamping device according to claim 17, wherein the piston rod of the first mold-clamping cylinder has a diameter that is substantially half of the diameter of the cylinder body, the second piston rod of the second mold-clamping cylinder has a diameter that is substantially half of the diameter of the second cylinder body, and during releasing or closing of a mold, the total volume of the rod chambers of the first mold-clamping cylinders and the second rod chamber of the second mold-clamping cylinder is substantially equal to the total volume of the non-rod chambers of the first mold-clamping cylinders.
